# EUROPÄISCHE PATENTSCHRIFT

(11) **EP 0 440 832 B1**
(45) Veröffentlichungstag und Bekanntmachung des Hinweises auf die Patenterteilung: **09.06.1993**
(21) Anmeldenummer: 90102204.6
(22) Anmeldetag: 05.02.1990
(51) Int. Cl.: G01D 18/00

(54) **Winkelmesstisch**
Angle measuring table
Table de mesure des angles

(43) Veröffentlichungstag der Anmeldung: 14.08.1991
(73) Patentinhaber: Dr. Johannes Heidenhain GmbH, D-83292 Traunreut (DE)
(72) Erfinder: Dangschat, Holmer, Dipl.-Ing., D-8225 Traunreut (DE)

(56) Entgegenhaltungen:
- EP-A- 0 157 239
- PATENT ABSTRACTS OF JAPAN, Band 9, Nr. 161 (P-370), 5. Juli 1985; & JP-A-60 037 544 (KONISHIROKU SHASHIN KOGYO K.K.) 26-02-1985
- PATENT ABSTRACTS OF JAPAN, Band 11, Nr. 98 (M-575), 27. März 1987; & JP-A-61 247 543 (TAKEO ISAKA) 04-11-1986

## Beschreibung

Die Erfindung betrifft einen Winkelmeßtisch gemäß dem Oberbegriff des Anspruchs 1.

In der Druckschrift "Feinwerktechnik et Meßtechnik" 88 (1980) 7 , S.343-5, ist ein derartiger Winkelmeßtisch zur Winkelmessung oder Winkeleinstellung eines Prüfobjektes beschrieben, das auf einem Drehtisch aufgebracht ist, dessen Rotor mittels eines Präzisionslagers, beispielsweise mittels eines Luftlagers, in einem Stator gelagert ist. Zur Winkelmessung und Winkeleinstellung ist am Rotor eine Teilscheibe befestigt, deren Winkelteilung von einer mit dem Stator verbundenen Abtasteinheit abgetastet wird. Die Winkelteilung einer solchen Teilscheibe ist jedoch fertigungsbedingt mit gewissen Fehlern behaftet, die bei Präzisionsmessungen zu nicht tragbaren Meßfehlern führen können.

Aus der Druckschrift "Zeitschrift für Instrumentenkunde" VI. Jahrgang, Januar bis März 1886 ist ein Prüfverfahren von Schreiber bekannt, bei dem der Fehlerverlauf einer Winkelteilung mittels vierer paarweise sich gegenüberstehender Mikroskope ermittelt wird. Der mittels dieses relativ aufwendigen Prüfverfahrens ermittelte Fehlerverlauf der Winkelteilung einer Teilscheibe kann sich jedoch nach dem Einbau der Teilscheibe beispielsweise in einen Winkelmeßtisch im Laufe der Zeit durch Umwelteinflüsse, insbesondere Temperatureinflüsse, verändern, so daß wiederum Meßungenauigkeiten auftreten können.

Der Erfindung liegt die Aufgabe zugrunde, einen Winkelmeßtisch der genannten Gattung anzugeben, der die Erfassung eines sich zeitlich ändernden Fehlerverlaufs der Winkelteilung bei auf dem Drehtisch aufgebrachtem Objekt ermöglicht.

Diese Aufgabe wird erfindungsgemäß durch die kennzeichnenden Merkmale des Anspruches 1 gelöst.

Die mit der Erfindung erzielten Vorteile bestehen insbesondere darin, daß durch die Integration der Kalibriereinrichtung im Winkelmeßtisch die Kalibrierung der ersten Winkelteilung beliebig oft vorgenommen werden kann, insbesondere vor einem Winkelmeßvorgang oder Winkeleinstellvorgang, wobei die Oberfläche des Drehtisches während des Kalibriervorganges für Meßaufbauten zur Verfügung steht.

Vorteilhafte Ausbildungen der Erfindung entnimmt man den Unteransprüchen.

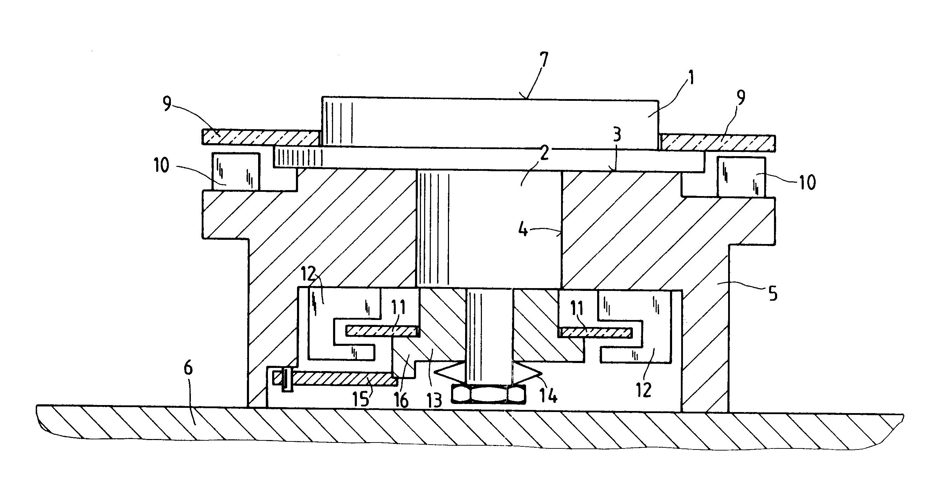

Ein Ausführungsbeispiel der Erfindung wird anhand der Zeichnung näher erläutert.

In der Figur ist in einem Querschnitt ein Winkelmeßtisch mit einem Drehtisch 1 dargestellt, dessen Rotor 2 mittels eines axialen Luftlagers 3 und mittels eines radialen Luftlagers 4 in einem Stator 5 gelagert ist; der Stator 5 ist auf einer Grundplatte 6 befestigt.

Der Winkelmeßtisch dient zur Winkelmessung oder Winkeleinstellung eines nicht gezeigten Objekts, das auf der ebenen Oberfläche 7 des Drehtisches 1 aufgebracht ist.

Am Drehtisch 1 ist konzentrisch eine erste Teilscheibe 9 mit einer ersten Winkelteilung befestigt, die von zwei sich diametral gegenüberliegenden ersten Abtasteinheiten 10 zur Ermittlung von Winkelmeßwerten für die Winkellage des Prüfobjekts bezüglich einer Nullage abgetastet werden; die beiden ersten Abtasteinheiten 10 sind einander diametral gegenüberliegend am Stator 5 befestigt und bilden zusammen mit der ersten Teilscheibe 9 eine erste Winkelmeßeinrichtung.

Die erste Winkelteilung der ersten Teilscheibe 9 weist im allgemeinen jedoch gewisse Fehler auf, die bei Präzisionsmessungen zu nicht tragbaren Winkelmeßfehlern führen können.

Zur Ermittlung des Fehlerverlaufs der ersten Winkelteilung und damit zu ihrer Kalibrierung ist im Winkelmeßtisch unterhalb des radialen Luftlagers 4 eine Kalibriereinrichtung in Form einer zweiten Winkelmeßeinrichtung integriert, die eine zweite Teilscheibe 11 mit einer zweiten Winkelteilung sowie zwei zweite Abtasteinheiten 12 aufweist, die einander diametral gegenüberliegend am Stator 5 befestigt sind. Die zweite Teilscheibe 11 ist konzentrisch am Rotor 2 mittels einer Rutschkupplung 13 drehbar angeordnet, die von einer sich am Rotor 2 abstützenden Tellerfeder 14 beaufschlagt ist. Mittels eines im Stator 5 schwenkbar gelagerten Sperrhebels 15 und einer Nocke 16 der Rutschkupplung 13 kann die zweite Teilscheibe 11 drehfest am Stator 5 in der Nullage arretiert werden. Die Betätigung des Sperrhebels 15 kann elektromechanisch oder pneumatisch erfolgen.

Zur Kalibrierung der Fehler der ersten Winkelteilung wird die erste Teilscheibe 9 mittels eines nicht dargestellten Rotorantriebs für den Drehtisch 1 in einer ersten Meßreihe in n Winkellagen mit einem jeweiligen gegenseitigen Versatz von 360°/n bezüglich der sich mitdrehenden zweiten Teilscheibe 11 vermessen. Anschließend werden die zweite Teilscheibe 11 mittels des Sperrhebels 15 und der Nocke 16 der Rutschkupplung 13 drehsteif mit dem Stator 5 verbunden und die erste Winkelteilung mittels des Rotorantriebes des Drehtisches 1 um einen Winkel 360°/n gegenüber der zweiten Winkelteilung weitergedreht. Nach dem Lösen des Sperrhebels 15 wird für die zweite Meßreihe die erste Teilscheibe 9 mitsamt der zweiten Teilscheibe 11 wiederum in n Winkellagen mit dem jeweiligen gegenseitigen Versatz von 360°/n vermessen. Dieser Kalibriervorgang wird bis zum Vorliegen von n Meßreihen fortgesetzt, so daß n² Meßwerte zur Verfügung stehen. Durch Mittelwertbildung der Meßwerte der den jeweiligen Winkelteilungen zugeordneten Meßreihen können die Fehler der ersten Winkelteilung und die Fehler der zweiten Winkelteilung voneinander getrennt und daraus die entsprechenden Fehlerkorrekturwerte zur Korrektur der Winkelmeßwerte ermittelt werden.

Da die Kalibriereinrichtung im Winkelmeßtisch integriert ist, steht die ebene Oberfläche 7 des Drehtisches 1 während des Kalibriervorganges für Meßaufbauten zur Verfügung. Man kann also für besonders genaue Messungen das Prüfobjekt auf der ebenen Oberfläche 7 des Drehtisches 1 anordnen und zunächst eine probeweise Messung der Winkellage des Prüfobjekts durchführen. Nach der anschließenden Kalibrierung der ersten Winkelteilung kann die Messung der Winkellage des Prüfobjekts erneut vorgenommen werden.

Die Erfindung kann auch bei Teilmaschinentischen und bei beliebigen Teil-, Meß- oder Winkeleinstelleinrichtungen mit Erfolg eingesetzt werden.

## Patentansprüche

1. Winkelmeßtisch zur Winkelmessung oder Winkeleinstellung eines Objekts, bei der ein Drehtisch (1) zur Aufnahme des Objekts in einem Stator (5) gelagert ist und eine Winkelteilung aufweist, die von wenigstens einer mit dem Stator verbundenen Abtasteinheit (10) abgetastet wird, dadurch gekennzeichnet, daß zur Kalibrierung dieser ersten Winkelteilung im Winkelmeßtisch eine Kalibriereinrichtung in Form einer Winkelmeßeinrichtung integriert ist, die eine drehfest mit dem Drehtisch (1) verbundene, jedoch auch konzentrisch zum Drehtisch (1) verdrehbare zweite Winkelteilung aufweist, die von wenigstens einer am Stator (5) befestigten zweiten Abtasteinheit (12) abgetastet wird.

2. Winkelmeßtisch nach Anspruch 1, dadurch gekennzeichnet, daß eine die zweite Winkelteilung aufweisende zweite Teilscheibe (11) konzentrisch am Rotor (2) des Drehtisches (1) mittels einer Rutschkupplung (13) drehbar angeordnet und mittels eines im Stator (5) schwenkbar gelagerten Sperrhebels (15) und einer Nocke (16) der Rutschkupplung (13) am Stator (5) drehfest arretierbar ist.

3. Winkelmeßtisch nach Anspruch 2, dadurch gekennzeichnet, daß die Rutschkupplung (13) von einer sich am Rotor (2) des Drehtisches (1) abstützenden Feder (14) beaufschlagt ist.

4. Winkelmeßtisch nach Anspruch 3, dadurch gekennzeichnet, daß die Feder (14) aus einer Tellerfeder besteht.

## Claims

1. Angle measuring table for measuring or adjusting the angle of an object, in which a turntable (1) for holding the object is mounted in a stator (5) and comprises an angular scale which is scanned by at least one scanning unit (10) connected to the stator, characterised in that for calibration of this first angular scale there is incorporated in the angle measuring table a calibrating device in the form of an angle measuring device which comprises a second angular scale non-rotatably connected to the turntable (1) but also rotatable concentrically to the turntable (1), and which is scanned by at least one second scanning unit (12) fixed to the stator (5).

2. Angle measuring table according to claim 1, characterised in that a second index disc (11) comprising the second angular scale is rotatably mounted concentrically on the rotor (2) of the turntable (1) by means of a sliding clutch (13) and can be locked non-rotatably to the stator (5) by means of a locking lever (15) mounted pivotably in the stator (5) and a projection (16) of the sliding clutch (13).

3. Angle measuring table according to claim 2, characterised in that the sliding clutch (13) is acted upon by a spring (14) supported on the rotor (2) of the turntable (1).

4. Angle measuring table according to claim 3, characterised in that the spring (14) consists of a cup spring.

## Revendications

1. Table de mesure d'angles pour la mesure ou le réglage des angles d'un objet, dans laquelle une table tournante (1) destinée à recevoir l'objet est montée dans un stator (5) et présente une graduation de mesure qui est lue par au moins une unité de lecture (10) liée au stator, caractérisée par le fait que, pour l'étalonnage de cette première graduation de mesure, un dispositif d'étalonnage est intégré dans la table de mesure, lequel dispositif se présente sous la forme d'un dispositif de mesure d'angles qui comporte une deuxième graduation de mesure tournante qui est solidaire en rotation de la table tournante (1) mais peut tourner concentriquement à celle-ci et est lue par au moins une deuxième unité de lecture (12) fixée sur le stator (5).

2. Table de mesure d'angles selon la revendication 1, caractérisée par le fait qu'un deuxième disque gradué (11) portant la deuxième graduation est monté concentriquement, avec possibilité de rotation, sur le rotor (2) de la table tournante (1) par l'intermédiaire d'un accouplement à friction (13) et peut être bloqué en rotation sur le stator (5) au moyen d'un levier de blocage (15) monté pivotant sur le stator (5) et d'un mentonnet (16) de l'accouplement à- friction (13).

3. Table de mesure d'angles selon la revendication 2, caractérisée par la fait que l'accouplement à friction (13) est sollicité par un ressort (14) qui prend appui sur le rotor (2) de la table tournante (1).

4. Table de mesure d'angles selon la revendication 3, caractérisée par la fait que le ressort (14) est une rondelle-ressort.
